Europäisches Patentamt

European Patent Office

Office européen des brevets

(19)

(11) Numéro de publication : **0 083 881
B1**

(12)

# FASCICULE DE BREVET EUROPÉEN

(45) Date de publication du fascicule du brevet :
**24.04.85**

(51) Int. Cl.⁴ : **F 16 D 55/224**

(21) Numéro de dépôt : **82402271.9**

(22) Date de dépôt : **13.12.82**

(54) **Frein à disque à étrier coulissant.**

(30) Priorité : **14.12.81 ES 507931**

(43) Date de publication de la demande :
**20.07.83 Bulletin 83/29**

(45) Mention de la délivrance du brevet :
**24.04.85 Bulletin 85/17**

(84) Etats contractants désignés :
**DE FR GB IT**

(56) Documents cités :
**DE-A- 2 636 442
FR-A- 2 436 911
US-A- 3 944 028**

(73) Titulaire : **BENDIBERICA S.A.
Balmès 243
Barcelona 6 (ES)**

(72) Inventeur : **Boffil, Joaquim Ferret
Calle Mallorca 93
Barcelona 29 (ES)**

(74) Mandataire : **Le Moenner, Gabriel et al
SERVICE BREVETS BENDIX 44, Rue François 1er
F-75008 Paris (FR)**

Jouve, 18, rue St-Denis, 75001 Paris, France

## Description

L'invention a pour objet un frein à disque à étrier coulissant, notamment pour véhicule automobile, du type comprenant étrier formant une monture placée au moins partiellement autour d'un support fixe et monté coulissant, au moyen d'au moins une colonnette axiale, sur le support fixe dans lequel sont reçus en ancrage et en coulissement deux éléments de friction susceptibles de venir en engagement de friction avec les faces opposées d'un disque tournant lors de la mise en œuvre de moyens d'actionnement constitués par au moins un moteur de .frein agissant directement sur l'un des éléments de friction et indirectement sur l'autre élément de friction par réaction au travers de l'étrier coulissant, la colonnette s'étendant dans des alésages prévus en vis-à-vis dans le support fixe et l'étrier.

Un tel frein est décrit dans le document DE-A-2 636 442.

Habituellement, dans les freins de ce type, l'élément de friction sollicité par réaction au travers de l'étrier coulissant est appliqué sur la face correspondante du disque au moyen d'une portion d'appui de cet étrier formant approximativement un angle droit par rapport à une portion intermédiaire en voûte de l'étrier qui passe au-dessus du disque. La portion d'appui de l'étrier qui sollicite par réaction l'élément de friction, travaillant sensiblement en porte-à-faux, est soumise en fonctionnement à un couple de basculement, sa liaison avec la portion en voûte étant située radialement au-delà de la périphérie du disque, c'est-à-dire au-delà du centre de poussée du moteur de frein. Un tel agencement provoque une usure radiale sur l'élément de friction d'autant plus importante que l'on se rapproche de la périphérie du disque, ceci étant dû à la flexion en écartement de la portion d'appui. De plus, lors du relâchement du frein, la portion d'appui n'étant plus sollicitée en flexion, la portion de l'élément de friction la plus éloignée de la périphérie du disque entre en contact avec celui-ci. Pour limiter ces inconvénients, la voûte de l'étrier passant par dessus le disque et la zone de raccordement entre voûte et portion d'appui doit être renforcée et largement dimensionnée pour limiter la flexion de ladite portion d'appui, ce qui nécessairement entraîne une augmentation du poids du frein.

Le frein du document DE-A-2 636 442 comporte en outre des tiges de maintien et de guidage de patins de frictions s'étendant entre deux zones centrales axialement opposées de l'étrier, sensiblement au niveau, radialement, des colonnettes. Ces tiges de guidage sont simplement logées dans des trous en vis-à-vis desdites zones de l'étrier et retenues en position dans ces derniers par des circlips.

L'invention a pour objet de proposer un frein à disque à étrier coulissant du type ci-dessus, de structure compacte et légère et dans lequel les inconvénients sus-mentionnés sont évités.

A cet effet, l'invention propose un frein à disque à étrier monté coulissant du type sus-mentionné, dans lequel l'étrier comporte au moins un renfort axial disposé radialement au-delà de la périphérie du disque, et reliant, avec transmission axiale d'efforts entre elles, une première partie de l'étrier placée du côté du moteur de frein et une seconde partie de l'étrier susceptible de solliciter l'autre élément de friction dans une première zone plus éloignée radialement vers l'extérieur que le centre de poussée du moteur de frein, par rapport à l'axe du disque, l'autre élément de friction étant également sollicité par la seconde partie de l'étrier en une seconde zone moins éloignée radialement vers l'extérieur que le centre de poussée du moteur de frein, le renfort empêchant le fléchissement de ladite première zone lorsque le frein est appliqué.

Avec cet agencement, l'élément de friction appliqué par réaction sur le disque est sollicité par l'étrier en deux zones, une (ladite seconde zone) placée en dessous du centre de poussée du moteur de frein et l'autre (ladite première zone) placée au-dessus du centre de poussée du moteur de frein, cette dernière zone étant maintenue par le renfort pour éviter son fléchissement lorsque le frein est appliqué.

Un autre objet de l'invention est d'utiliser ce renfort axial comme axe de guidage des éléments de friction.

On décrira maintenant à titre d'exemples non limitatifs des modes de réalisation de l'invention, en se référant aux figures annexées, dans lesquelles :

la figure 1 est une vue de dessus d'un frein à disque réalisé conformément à l'invention ;

la figure 2 est une vue de face du frein à disque de la figure 1 dont une moitié est représentée en coupe transversale ;

la figure 3 est une vue de la face intérieure du frein à disque de la figure 1 dont une moitié est représentée en coupe transversale ;

la figure 4 est une vue en coupe selon la ligne 4-4 de la figure 1 ;

la figure 5 est une vue analogue à la figure 1 montrant une variante de réalisation d'un frein selon l'invention ; et

la figure 6 est une vue de la face intérieure du frein de la figure 5.

Dans la description qui va suivre et sur les dessins, les éléments identiques ou analogues dans les différents modes de réalisation portent les mêmes chiffres de référence, éventuellement affectés d'indices prime.

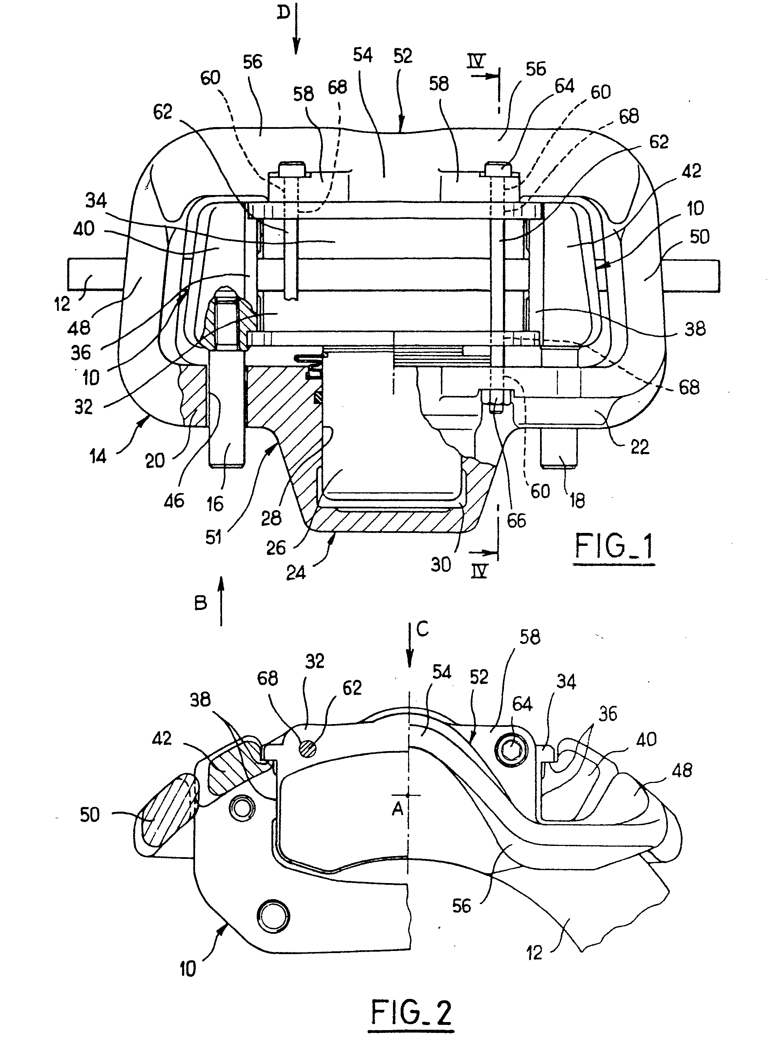

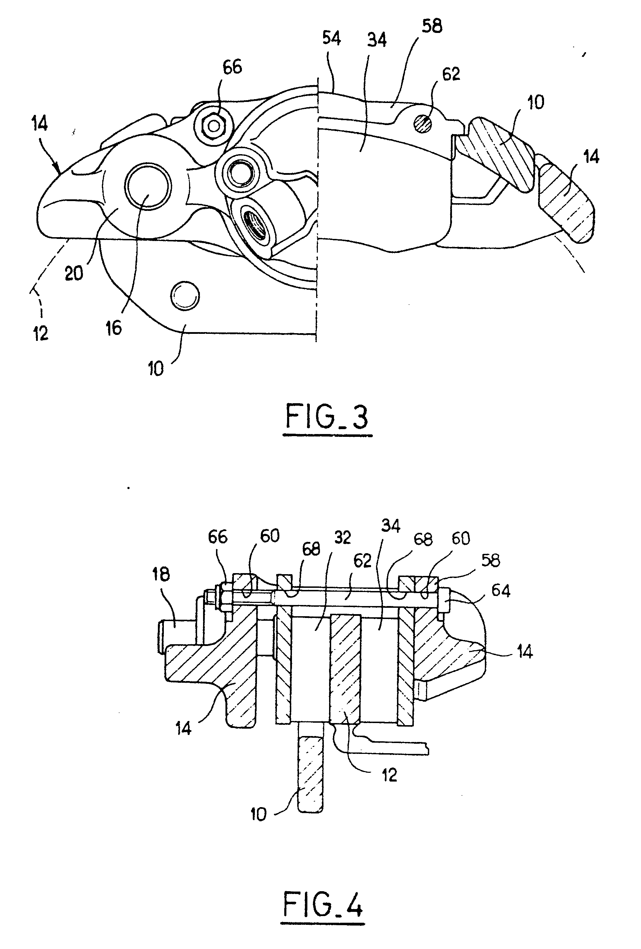

Le frein à disque représenté sur les figures 1 à 4 comporte un support fixe 10 prévu pour être associé à une partie fixe du véhicule (non représentée) et constitué, dans le mode de réalisation représenté, par une plaque sensiblement en forme de U disposée au voisinage d'un disque 12 prévu pour être associé en rotation à une roue du véhicule (non représentée). Le support fixe 10 reçoit en coulissement, au moyen de deux colonnettes axiales circonférentiellement espacées 16 et 18, un étrier mobile 14 chevauchant le disque. Les axes des colonnettes 16 et 18 sont sensiblement parallèles à l'axe de rotation du disque 12 et les colonnettes 16 et 18 sont disposées entre le support fixe 10 et des bras intérieurs latéraux 20 et 22 définis dans l'étrier 14. L'étrier 14 comporte classiquement des moyens d'actionnement constitués par un moteur de frein hydraulique 24 (voir figure 1) comprenant un piston 26 monté coulissant dans un alésage 28 défini dans l'étrier 14 et sensible à la pression régnant dans une chambre de commande 30 susceptible d'être reliée à une source de pression telle que par exemple, le maître-cylindre du véhicule (non représenté). Le piston 26 est disposé de façon à solliciter directement un premier élément de friction ou élément intérieur 32 contre une première face du disque 12 lorsque le fluide sous pression est admis dans la chambre 30. Par réaction, l'étrier 14 est susceptible de se déplacer axialement en coulissement sur les colonnettes 16 et 18 afin de solliciter un second élément de friction ou élément extérieur 34 contre l'autre face du disque 12. Comme le montre en particulier les figures 1 et 2, l'élément de friction intérieur 32 est supporté en coulissement et en ancrage par les bords axiaux circonférentiellement espacés 36 et 38 formés sur les bras latéraux 40 et 42 s'étendant axialement, respectivement, du support fixe 10. D'une manière identique, l'élément de friction extérieur 34 est également reçu en ancrage et en coulissement sur le support fixe 10.

Comme le montre plus particulièrement la figure 1, les deux colonnettes 16 et 18 sont associées au support fixe 10 par une liaison filetée. Dans le mode de réalisation représenté, les colonnettes 16 et 18, qui permettent le mouvement de coulissement de l'étrier 14, sont montées vissées sur le support fixe, les bras latéraux intérieurs 20 et 22 de l'étrier 14 étant munis d'alésages 46 dans lesquels sont enfilées les colonnettes 16 et 18.

Conformément à l'invention, comme on le voit plus particulièrement sur la figure 1, l'étrier 14 forme une monture ou structure en forme de cadre fermé non plan placée autour du support fixe 10 et chevauchant le disque 12 au moyen de deux bras latéraux 40 et 42 du support fixe 10. Les bras latéraux 48 et 50 de l'étrier 14 sont reliés entre eux, d'une part, par une première partie intérieure 51 comprenant le moteur frein 24, et, d'autre part, par une seconde partie extérieure 52 fermant l'étrier et destinée à solliciter l'élément de friction extérieur 34.

En se reportant à la figure 2, on voit que la seconde partie 52 de l'étrier 14 comporte une première zone centrale 54 de sollicitation plus éloignée radialement, par rapport à l'axe du disque, que le centre de poussée du moteur de frein, matérialisé par le point A sur la figure 2. La seconde partie 52 de l'étrier 14 comporte également au moins une seconde zone 56 (en l'occurence deux, de part et d'autre de la zone 54), qui sollicite également l'élément de friction 34 mais, cette fois, en une zone moins éloignée radialement que le centre de poussée A du moteur de frein. Typiquement, la seconde partie 52 comporte deux zones du type 56 disposées symétriquement par rapport au plan de symétrie du frein (plan médian des figures).

La première zone 54 est prolongée latéralement, de part et d'autre du plan de symétrie, par deux oreilles 58 dans lesquelles sont formées des ouvertures axiales 60 placées en vis-à-vis de celles formées sur la seconde partie 52 de l'étrier. Deux boulons 62 sont montés dans ces ouvertures 60 et s'étendent axialement au-dessus de la périphérie du disque 12. Chacun des boulons 62 comporte à une de ses extrémités une portion épanouie 64 formant tête portant en appui sur les oreilles 58 et, à l'autre extrémité, une portion filetée sur laquelle est vissé un écrou 66 lui-même portant en appui sur la première partie 51 de l'étrier. Conformément à un aspect de l'invention, les éléments de friction 32 et 34 comportent des ouvertures 68 au travers desquelles passent les boulons 62, qui forment ainsi avantageusement axes de guidage pour ces éléments de friction.

On voit ainsi que les boulons 62 jouent le rôle de renforts d'entretoisement axiaux de la seconde partie 52 de l'étrier 14 et en particulier empêchent le fléchissement ou l'écartement de la zone 54 lorsque le frein est appliqué.

L'opération de montage de l'étrier 14 sur le support fixe 10 s'effectue de la façon suivante :

L'étrier 14 est placé autour du support fixe 10 comme représenté sur la figure 1. Lorsque les alésages 46 de l'étrier 14 se trouvent en vis-à-vis des alésages taraudés formés sur le support fixe 10, les colonnettes 16 et 18 sont introduites dans les alésages 46 dans le sens de la flèche B puis vissées dans le support fixe à l'aide d'un outil approprié (non représenté). On procède ensuite au montage des éléments de friction 32 et 34 en introduisant ceux-ci entre les bras latéraux 40 et 42 du support fixe 10 suivant la flèche C de la figure 2. Lorsque les éléments de friction sont en appui sur les surfaces de coulissement 38, on introduit selon la flèche D de la figure 1 les boulons 62 en les faisant passer par les ouvertures 60 de l'étrier 14 et par les ouvertures 68 formées sur les plaques support desdits éléments de friction. Les écrous 66 sont alors vissés sur les boulons 62 au moyen d'un outil approprié (non représenté). Les écrous 66 sont montés serrés sur les boulons 62 de manière qu'ils soient sous précontrainte, jouant ainsi le rôle de renfort à l'étrier 14.

On voit ainsi que, lorsque le frein est appliqué, la seconde partie 52 de l'étrier est maintenue par rapport à la première partie 51 de l'étrier d'une part au moyen des bras latéraux 48 et 50 et d'autre part au moyen des boulons 62 évitant ainsi une déflexion de ladite seconde partie. L'usure de l'élément de friction 34 est alors régulière et, au relâchement du frein, il ne subsiste pas de couple résiduel dû à une usure différentielle dans le sens radial de l'élément de friction.

Il est bien évident, que les écrous 66 peuvent être remplacés par un taraudage formé dans l'ouverture 60 sur la première partie 51 de l'étrier, le serrage des boulons 62 se faisant alors au moyen de la portion épanouie 64 formant tête et qui est vissée au moyen d'un outil approprié (non représenté).

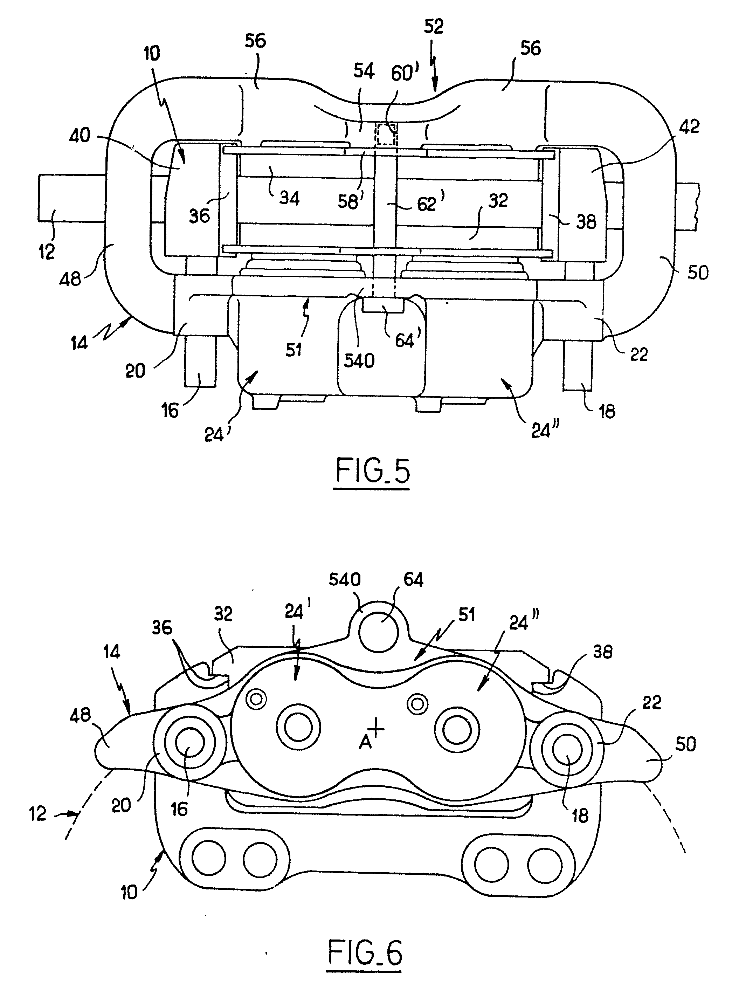

Le frein du mode de réalisation des figures 5 et 6 est, dans ses grandes lignes, identique à celui du mode de réalisation qui vient d'être décrit. Outre le fait qu'il comporte deux moteurs de frein 24' et 24'' en parallèle, symétriques par rapport au plan de symétrie du plan de symétrie du frein et définissant un centre de poussée moyen A similaire à celui précédemment décrit, ce mode de réalisation diffère essentiellement du précédent en ce sens qu'il est prévu un seul boulon central 62' reçu dans un alésage 60' de la première zone centrale en surélévation 54 de la seconde partie (extérieure) 52 de l'étrier 14. Corrélativement, la première partie (intérieure) 51 de l'étrier comporte, entre les deux moteurs, une zone centrale 540 en surélévation, s'étendant radialement au-delà de la périphérie du disque 12, pour le montage du boulon 62'. Dans le mode de réalisation représenté, comme évoqué ci-dessus, l'extrémité filetée du boulon 62' est vissée dans l'alésage taraudé 60' de la patte centrale en saillie 54. Le boulon 62' peut simplement s'étendre au-dessus du bord supérieur des éléments de friction 32 et 34 pour maintenir radialement ces derniers ; toutefois, comme dans le mode de réalisation précédent, le boulon 62' peut servir au guidage des éléments de friction 32 et 34, en prévoyant chacun de ceux-ci avec une patte centrale en saillie radialement vers l'extérieur, à la façon des zones centrales opposées 54 et 540 de l'étrier, pourvue d'un orifice axial traversant pour le passage du boulon.

Quoique décrite en relation avec des modes de réalisation particuliers, la présente invention ne s'en trouve pas limitée. En particulier, il est possible, selon les besoins, de réaliser un étrier de frein comportant trois boulons en triangle ou sensiblement alignés. De même, d'autres modes de montage de renforts cylindriques ou prismatiques peuvent être envisagés.

## Revendications

1. Frein à disque à étrier (14) formant une monture placée au moins partiellement autour d'un support fixe et monté coulissant, au moyen d'au moins une colonnette axiale (16, 18), sur le support fixe (10) dans lequel sont reçus en ancrage et en coulissement deux éléments de friction (32, 34) susceptibles de venir en engagement de friction avec les faces opposées d'un disque tournant (12) lors de la mise en œuvre de moyens d'actionnement constitués par au moins un moteur de frein (24, 24', 24'') agissant directement sur l'un (32) des éléments de friction et agissant sur l'autre (34) élément de friction par réaction au travers de l'étrier coulissant (14), la colonnette (16, 18) s'étendant dans des alésages (46) prévus en vis-à-vis dans le support fixe (10) et dans l'étrier (14), caractérisé en ce que l'étrier (14) comporte au moins un renfort (62, 62') axial disposé radialement au-delà de la périphérie du disque (12) et reliant avec transmission axiale d'efforts entre elles une première partie (51) de l'étrier placée du côté du moteur de frein (24) et une seconde partie (52) de l'étrier susceptible de solliciter ledit autre élément de friction (34) dans une première zone (54) plus éloignée radialement vers l'extérieur que le centre de poussée (A) du moteur de frein, par rapport à l'axe du disque, ledit autre élément de friction (34) étant également sollicité par la seconde partie (52) de l'étrier en au moins une seconde zone (56) moins éloignée radialement vers l'extérieur que le centre de poussée (A) du moteur de frein, le renfort empêchant le fléchissement de ladite première zone (54) lorsque le frein est appliqué.

2. Frein à disque selon la revendication 1, caractérisé en ce que le renfort (62 ; 62') est constitué d'un élément cylindrique dont les extrémités coopèrent respectivement avec la première partie (51) et avec la seconde partie (52) de l'étrier (14).

3. Frein à disque selon la revendication 2, caractérisé en ce que le renfort (62 ; 62') est solidarisé de façon amovible aux première (51) et seconde (52) parties de l'étrier (14).

4. Frein à disque selon la revendication 3, caractérisé en ce que le renfort (62 ; 62') s'étend dans des orifices (60 ; 60') formés en vis-à-vis dans lesdites parties (51, 52) de l'étrier (14) et comporte, à une extrémité, une tête d'appui (64 ; 64') et, à l'autre extrémité, une portion filetée.

5. Frein à disque selon la revendication 4, caractérisé en ce que le renfort (62 ; 62') traverse des ouvertures (68) formées dans les plaques supports des éléments de friction (32 ; 34).

6. Frein à disque selon l'une des revendications précédentes, caractérisé en ce qu'il comporte un renfort axial (62') s'étendant dans le plan de symétrie du frein.

7. Frein à disque selon l'une des revendications 1 à 5, caractérisé en ce qu'il comprend une paire de renforts axiaux (62) symétriques par rapport au plan de symétrie du frein.

## Claims

1. A disc brake including a caliper (14) forming a frame at least partially surrounding a fixed support and slidingly mounted by means of at least one axial column (16, 18) on the fixed support (10) wherein two friction elements (32, 34) are anchored and slidingly received, which friction elements are adapted to frictionally engage the opposite faces of a rotating disc (12) upon actuation of actuating means comprised of at least one brake motor (24, 24', 24'') acting directly upon the one (32) of the friction elements and acting upon the other (34) friction element by reaction via the sliding caliper (14), the column (16, 18) extending within bores (46) provided in opposed relation within the fixed support (10) and the caliper (14), characterized in that the caliper (14) comprises at least one axial reinforcing member (62, 62') disposed radially beyond the periphery of the disc (12) and connecting a first portion (51) of the caliper disposed at the side of the brake motor (24) and a second portion (52) of the caliper to each other in axial force-transmitting relationship, the second portion of the caliper being adapted to bias said other friction element (34) in a first zone (54) being axially more remote from the axis of the disc towards the exterior than the pressure center (A) of the brake motor, said other friction element (34) being biased in a similar manner by the second portion (52) of the caliper in at least a second zone (56) being radially less remote towards the exterior than the pressure center (A) of the brake motor, the reinforcing member preventing bending of said first zone (54) during brake application.

2. The disc brake of claim 1, characterized in that the reinforcing member (62 ; 62') is comprised of a cylindrical element, the extremities of which cooperate with the first portion (51) and with the second portion (52) of the caliper (14), respectively.

3. The disc brake of claim 2, characterized in that the reinforcing member (62 ; 62') is removably fixed to the first (51) and second (52) portions of the caliper (14).

4. The disc brake of claim 3, characterized in that the reinforcing member (62 ; 62') extends within orifices (60 ; 60') formed in opposed relation within said portions (51, 52) of the caliper (14) and comprises at one extremity an abutment head (64 ; 64) and at the other extremity a threaded portion.

5. The disc brake of claim 4, characterized in that the reinforcing member (62 ; 62') traverses openings (68) formed in the support plates of the friction elements (32 ; 34).

6. The disc brake of any of the preceding claims, characterized in that it comprises an axial reinforcing member (62') extending within the plane of symmetry of the brake.

7. The disc brake of any of claims 1 to 5, characterized in that it comprises a pair of axial reinforcing members (62) symmetrical with respect to the plane of symmetry of the brake.

## Patentansprüche

1. Scheibenbremse mit einem Bremssattel (14) in Form eines Rahmens, der zumindest teilweise einen festen Bremsträger umgibt und mittels mindestens einem axialen Bolzen (16, 18) auf dem Bremsträger (10) gleitend gelagert ist, in welchem zwei Reibelemente (32, 34) gehalten und gleitend geführt sind, wobei die beiden Reibelemente in Reibanlage an die gegenüberliegenden Flächen einer umlaufenden Bremsscheibe (12) durch Betätigungsmittel andrückbar sind, die .

von mindestens einem Bremsmotor (24, 24', 24") gebildet werden, wobei der Bremsmotor direkt auf eines (32) der Reibelemente und indirekt über den gleitenden Bremssattel (14) auf das andere Reibelement (34) einwirkt, wobei der Bolzen (16, 18) in Bohrungen (46) angeordnet sind, die gegenüberliegend im Bremsträger (10) und im Bremssattel (14) vorgesehen sind, dadurch gekennzeichnet, daß der Bremssattel (14) mindestens ein axiales Verstärkungsstück (62, 62') aufweist, das radial außerhalb des Umfangs der Bremsscheibe (12) angeordnet ist und mit axialer Kraftübertragung einen auf der Seite des Bremsmotors (24) angeordneten ersten Abschnitt (51) des Bremssattels und einen zweiten Abschnitt (52) des Bremssattels untereinander verbindet, wobei der zweite Abschnitt das besagte andere Reibelement (34) in einem ersten Bereich (54) vorzuspannen in der Lage ist, der bezüglich der Bremsscheibenachse radial nach außen weiter entfernt ist als der Druckpunkt (A) des Bremsmotors, wobei das besagte andere Reibelement (34) in der gleichen Weise durch den zweiten Abschnitt (52) des Bremssattels in mindestens einem zweiten Bereich (56) vorgespannt wird, der radial nach außen weniger weit entfernt ist als der Druckpunkt (A) des Bremsmotors, wobei das Verstärkungsstück ein Verbiegen des ersten Bereiches (54) bei eingerückter Bremse verhindert.

2. Scheibenbremse nach Anspruch 1, dadurch gekennzeichnet, daß das Verstärkungsstück (62 ; 62') von einem zylindrischen Teil gebildet wird, dessen Enden mit dem ersten Abschnitt (51) bzw. mit dem zweiten Abschnitt (52) des Bremssattels (14) zusammenwirken.

3. Scheibenbremse nach Anspruch 2, dadurch gekennzeichnet, daß das Verstärkungsstück (62 ; 62') mit dem ersten (51) und zweiten (52) Abschnitt des Bremssattels (14) lösbar verbunden ist.

4. Scheibenbremse nach Anspruch 3, dadurch gekennzeichnet, daß das Verstärkungsstück (62 ; 62') in Öffnungen (60 ; 60') verläuft, die gegenüberliegend in den besagten Abschnitten (51, 52) des Bremssattels (14) gebildet sind, und an einem Ende einen Anlagekopf (64 ; 64') und am anderen Ende einen Gewindeabschnitt aufweist.

5. Scheibenbremse nach Anspruch 4, dadurch gekennzeichnet, daß das Verstärkungsstück (62 ; 62') Öffnungen (68) durchquert, die in den Belagträgerplatten der Reibelemente (32 ; 34) gebildet sind.

6. Scheibenbremse nach einem der vorhergehenden Ansprüche, dadurch gekennzeichnet, daß sie ein axiales Verstärkungsstück (62') aufweist, das in der Symmetrieebene der Bremse liegt.

7. Scheibenbremse nach einem der Ansprüche 1-5, dadurch gekennzeichnet, daß sie zwei axiale Verstärkungsstücke (62) aufweist, die bezüglich der Symmetrieebene der Bremse symmetrisch angeordnet sind.

FIG_1

FIG_2

FIG_3

FIG_4

FIG.5

FIG.6

3